# EUROPEAN PATENT SPECIFICATION

(11) **EP 1 975 365 B1**
(45) Date of publication and mention of the grant of the patent: **10.09.2014**
(21) Application number: 08251073.6
(22) Date of filing: 26.03.2008
(51) Int. Cl.: A01K 1/00, E06B 7/32

(54) **An animal access system**
Zugangssystem für Tiere
Système d'accès d'animal

(30) Priority: 28.03.2007 GB 0705926
(43) Date of publication of application: 01.10.2008
(60) Divisional application: 10010266.4
(73) Proprietor: Radio Systems Corporation, Knoxville, TN 37932 (US)
(72) Inventor: Chamberlain, David, St. Peters Guernsey GY7 9AL (GB)
(74) Representative: Sawodny, Michael-Wolfgang

(56) References cited:
- WO-A-99/67492
- DE-A1- 10 021 394
- GB-A- 1 576 318
- GB-A- 2 381 180

## Description

The present invention relates to an animal access system and particularly but not exclusively relates to an animal access system for mounting on a door or wall of a building to enable a cat or dog access to and from the building.

It has previously been proposed to provide an animal access system comprising a lockable door that is unlocked in response to a control signal generated as a result of a microchip implant in the animal being detected by a sensor adjacent the door. It has been proposed to provide such a system with a canopy in order to channel the animal towards the sensor. The sensor in practice is mounted at a projecting part of the canopy because the system typically only functions correctly when the animal implant is located directly below the sensor. UK patent 2381180 discloses such a system.

In use, the canopy projects significantly from the door or wall which is unsightly, can be a trip hazard, and is susceptible to damage. The damage can be costly to repair not least because the sensor is mounted in the canopy itself. Additionally there needs to be relatively good alignment and close proximity between the sensor and the implant in the animal for a control signal to be generated.

From GB-A-1 576 318 an automatic door operating apperatus for domestic animals has made known, wherein said automatic door operating apperatus comprises a permanent magnet mounted on or for mounting on a collar fort he animal, a door normally locked in a closed position and a sensor coil responsive to movement of the permanent magnet in the proximity of the coil for unlocking the door.

GB-A-2 381 180 shows an animal access system comprising an access door, sensor means and an implant, the arrangement being such that in use the implant is inserted through the outer tissue of an animal, the implant being detectable by the sensor means.

According to the invention there is provided an animal access system comprising a lockable access door, an access door surround, and an implant adapted to be inserted through the outer tissue of an animal, the access door surround being provided with an induction coil operative to induce an electro-magnetic field at the access door, the induction coil being controlled by control means operative to generate a control signal to lock or unlock the access door in response to a change in the induced electro-magnetic field generated as a result of the implant entering the induced electro-magnetic field.

The invention is characterized in that said access system comprises a telescopic tubular corridor extended or retracted to correspond to a thickness of the door or wall of a building, the access door and induction coil being spaced apart along the longitudinal axis of the tubular corridor.

Preferably the induction coil is spaced from the plane of the access door.

Since the system comprises an elongate housing adapted to the mounted on part of a building so as to extend through that part of the building, the access door and induction coil being spaced apart along the longitudinal axis of the housing, this may help to reduce water ingress through the system.

The length of the housing is adjustable.

Preferably the implant comprises a microchip.

Preferably the implant comprises detector means operative to detect at least one clinical parameter of the animal, the control means being operative to generate a health signal indicative of the clinical parameter, in response to a change in the induced electro-magnetic field.

Preferably the control means is operative to adjust the induced electro-magnetic field strength. Adjusting the magnetic field strength is operative to adjust the effective read range of the system.

The control means may comprise circuit means.

The control means may comprise microprocessor means.

Preferably the control means comprises memory means.

Preferably the memory means is operative to store data indicative of the identity of unauthorised animals attempting to access the animal access system.

Preferably the memory means is operative to store data indicative of the number of times an animal has been detected by the system.

Preferably the control means is provided with display means.

Preferably the control means is provided with data transfer means to enable data to be transferred between the control means and an external electronic data processor.

The data transfer means may comprise, for example, a USB port, or a wireless adaptor.

Preferably animal deterrent means is provided operative to deter an unauthorised animal from entering the animal access system.

Preferably the deterrent means is activated in response to a signal generated by the control means indicative of an animal not authorised to use the animal access system.

The deterrent means may comprise a fluid nozzle operative to direct fluid towards the non-authorised animal.

Preferably the system comprises a fluid source connected to the fluid nozzle, the fluid source being removably mounted on the system. This enables the fluid source to be replenished or replaced.

The deterrent means may comprise optical means operative to emit a deterrent optical signal. Preferably the deterrent optical signal comprises a flash of light from the optical means.

Other aspects of the present invention may include any combination of the features or limitations referred to herein.

The present invention may be carried into practice in various ways, but embodiments will now be described by way of example only with reference to the accompanying drawings in which:
Figure **1** is a front view of an animal access system in accordance with the present invention;
**Figure 2** is a side view of the animal access system of Figure 1; and

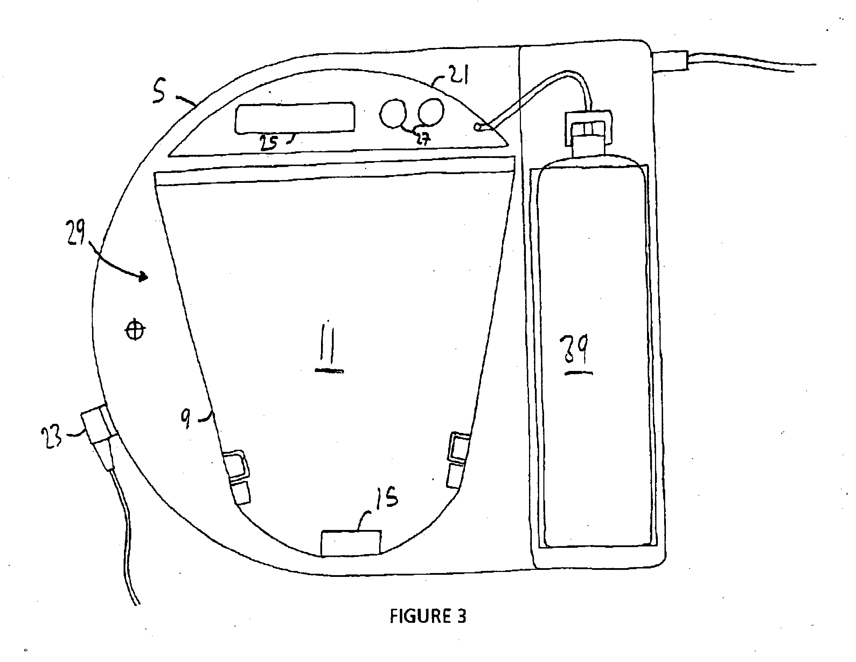

**Figure 3** is a rear view of the animal access system of Figures 1 and 2.

Referring to the Figures, an animal access system 1 comprises a front housing 3 linked to a rear housing 5 by a telescopic tubular corridor 7. The tubular corridor 7 in use extends through an opening formed in a door or wall of a building (not shown), the tubular corridor 7 being extended or retracted to correspond to the thickness of the door or wall. The front and rear housings 3, 5 are secured respectively to the front and rear of the door or wall using screws or the like.

The rear housing 5 is provided with an access aperture 9 closed by an animal access door 11, the top of the door 11 being pivotably mounted 13 on the rear housing 5 and the bottom of the door 11 being weighted and/or comprising a magnet 15 that is attracted to a corresponding magnet 17 mounted in the base of the rear housing 5. The weight or magnets 15, 17 serve to bias the door 11 to the closed position shown in the Figures.

A pair of locks 19 are provided at opposed side margins of the door 11 which when activated lock the door 11 in the closed position. Each lock 19 can comprise any suitable mechanism or mechanisms such as for example a solenoid. Activation of each lock 19 is controlled by control means 21 mounted in an upper part of the rear housing 5.

The control means 21 comprises, in this example, a microprocessor and electronic circuitry connected to a power source via power cable 23. The cable 23 is plugged into the rear housing 5 and a tamper resistant lock is provided to resist the cable 23 being pulled from the rear housing 5. The control means 21 further comprises a display 25 and control buttons 27.

The front housing 3 comprises an access door surround 29 that surrounds the periphery of an animal access aperture 31 which comprises one end of the telescopic tubular corridor 7.

The door surround 29 is provided with an induction coil 30 that extends around the access aperture 31, activation of the coil 30 being controlled by the control means 21.

The door surround 29 is also formed with an upper panel 33 in which are mounted an adjustable light sensor 35, a deterrent optical device comprising a light emitter 37, and a fluid nozzle 39 operative to emit a deterrent gas or liquid spray. The spray could comprise a mixture of a gas and a liquid. The light emitter 37 and fluid nozzle 39 comprise deterrent means controlled by the control means 21. The fluid nozzle 39 is connected to a removable fluid source comprising a canister 41 of compressed gas or fluid mounted on one side of the rear housing 5.

The system 1 further comprises an implant (not shown) adapted to be inserted through the outer skin of an animal that is to be allowed access through the door 11, the implant comprising a microchip.

In use of the system 1, the animal in which the microchip has been implanted approaches the front housing 3 and enters the induced electro-magnetic field produced by the induction coil 30 the electro-magnetic field projecting forwardly of the front housing 3. The microchip distorts the electro-magnetic field and this change in the field is detected by the control means 21 which generates a control signal operative to unlock the access door 11 to allow the animal access through the door 11.

If an animal comprising an implant that has not been granted access through the door 11 enters the induced electro-magnetic field, the control means 21 detects a distortion in the electro-magnetic field indicative of the non-authorised animal and either sends no control signal to the locks 19, or sends a control signal that activates the locks 19 to lock the door 11.

The control means 21 is also operative to activate the deterrent means when the change in the induced electro-magnetic field is indicative of a non-authorised animal. This would be the case if an un-programmed microchip was detected, or if a non-microchipped animal attempted entry. Thus, a deterrent flashing light can be produced by the light emitter 37, or a deterrent fluid spray can be omitted from the nozzle 39. A single pulse of light or fluid spray can be provided, or a sequence of pulses.

The control means 21 comprises any suitable electronic device but preferably comprises a programmable microprocessor comprising data transfer means that in this example comprises a USB port 43. The control means 21 comprises a clock and timer that are user programmable to enable access through the door 11 at predetermined times only. The user can also determine whether or not the deterrent means is activated, and the duration of such activation. The control means 21 is further operative in a set-up mode wherein the strength of the induced electro-magnetic field is adjusted to a desired range - ie the distance from the door 11 that the animal has to be to distort the induced electro-magnetic field can be adjusted.

The animal implant also comprises a detector operative to detect a clinical parameter of the animal such as pulse, temperature or the like. The implant and the control means 21 are arranged such that the implant causes a distortion of the induced electro-magnetic field that is processed by the control means 21 to indicate to the user, or to store, data indicative of the detected clinical parameter of the animal. The control means 21 is operative to store such data over time so as to indicate to the user, either on the display means or via a data file for viewing on an external device, any change in the detected clinical parameter(s) over time.

Additional software/data can be transferred to the control means 21 via the USB port. The USB port may comprise any other type of data transfer means including, for example, a wireless Blue Tooth^{®} means.

The control means 21 is controlled using the display 25 and buttons 27, or via an external device such as a PC or the like.

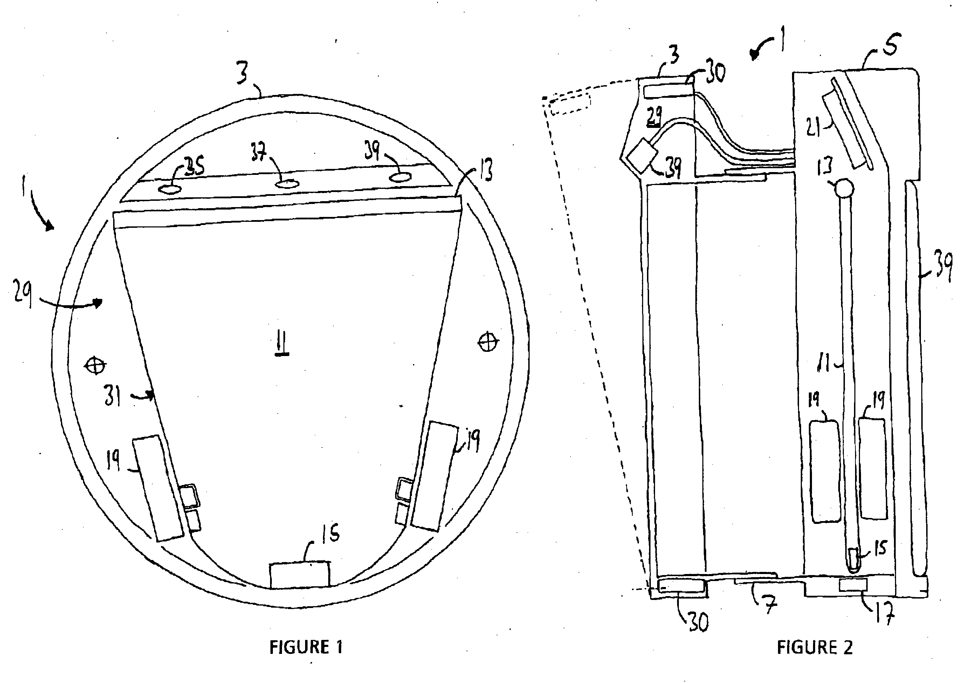

The door surround 29 may be inclined forwardly from the plate of the access aperture 31 by up to approximately 25°, as shown in phantom on Figure 2.

## Claims

1. An animal access system for use with an animal that has an implant inserted through its outer tissue, the system comprising; a lockable access door (11), an access door surround (29) which surrounds the periphery of an animal access aperture (31), there being an induction coil (30) operative to induce an electro-magnetic field at the access door (11), the induction coil being controlled by control means operative to generate a control signal to lock or unlock the access door in response to a change in the induced electro-magnetic field generated as a result of the implant entering the induced electro-magnetic field, the induction coil (30) arranged such that the electro-magnetic field projects forwardly of the induction coil (30) and animal access aperture,
**characterized in that** said access system comprises a front housing (3) linked to a rear housing (5) by a telescopic tubular corridor (7), the telescopic tubular corridor (7) being extended or retracted to correspond to a thickness of the door or wall of a building, the access door (11) and the induction coil (30) being spaced apart along the longitudinal axis of the tubular corridor (7).

2. The animal access system of claim 1 wherein the access door (11) is planar.

3. The animal access system according to any preceding claim, wherein the length of the tubular corridor (7) is adjustable.

4. The animal access system of any one of the preceding claimswherein the implant comprises a microchip.

5. The animal access system of any of one of the preceding claims, wherein the implant comprises detector means operative to detect at least one clinical parameter of the animal, the control means being operative to generate a health signal indicative of the clinical parameter, in response to a change in the induced electro-magnetic field.

6. The animal access system of any one of the preceding claims wherein the control means (21) is operative to adjust the induced electro-magnetic field strength.

7. The animal access system of any one of the preceding claims wherein the control means (21) comprises circuit means.

8. The animal access system of any one of the preceding claims, wherein the control means (21) comprises microprocessor means.

9. The animal access system of any one of the preceding claims, wherein the control means (21) comprises memory means.

10. The animal access system of claim 9, wherein the memory means is operative to store data indicative of the identity of unauthorized animals attempting to access the animal access system.

11. The animal access system of claim 9 or claim 10, wherein the memory means is operative to store data indicative of the number of times an animal has been detected by the system.

12. The animal access system of any one of the preceding claims, wherein the control means (21) is provided with display means.

13. The animal access system of any one of the preceding claims wherein the control means (21) is provided with data transfer means to enable data to be transferred between the control means (21) and an external electronic data processor.

14. The animal access system of any one of the preceding claims, wherein animal deterrent means is provided operative to deter an unauthorized animal from entering the animal access system.

15. The animal access system of claim 14, wherein the deterrent means is activated in response to a signal generated by the control means (21) indicative of an animal not authorized to use the animal access system.

16. The animal access system of claim 14 or claim 15, wherein the deterrent means comprises a fluid nozzle (39) operative to direct fluid towards the non-authorized animal.

17. The animal access system of claim 16, wherein the system comprises a fluid source connected to the fluid nozzle(39), the fluid source being removably mounted on the system.

18. The animal access system of any one of claims 15 to 17, wherein the deterrent means comprises optical means operative to emit a deterrent optical signal.

19. The animal access system of any one of the preceding claims, wherein the control means (21) comprises a clock and timer that are user programmable to enable access through the door at predetermined times only.

## Patentansprüche

1. Zugangssystem für Tiere zur Verwendung mit einem Tier, dem durch sein äußeres Gewebe ein Implantat eingesetzt worden ist, wobei das System Folgendes umfasst: eine sperrbare Zugangstür (11), eine Zugangstür-Einfassung (29), welche den Außenumfang einer Tierzugangsöffnung (31) umschließt, wobei eine Induktionsspule (30) vorgesehen ist, die dazu verwendet werden kann, an der Eingangstüre (11) ein elektromagnetisches Feld zu induzieren, wobei die Induktionsspule von Steuerungsmitteln gesteuert wird, die dazu verwendet werden können, ein Steuerungssignal zu generieren, um die Zugangstür als Reaktion auf eine Änderung im induzierten elektromagnetischen Feld zu sperren oder zu entsperren, die infolge des Eindringens des Implantats in das elektromagnetische Feld zustande kommt, wobei die Induktionsspule (30) so angeordnet ist, dass das elektromagnetische Feld vor die Induktionsspule (30) und die Tierzugangsöffnung vorragt, **dadurch gekennzeichnet, dass** das Zugangssystem ein vorderes Gehäuse (3) umfasst, das über einen teleskopisch-rohrförmigen Korridor (7) mit einem hinteren Gehäuse (5) verbunden ist, wobei der teleskopisch-rohrförmige Korridor (7) so verlängert oder verkürzt werden kann, dass er einer Dicke der Tür oder der Wand eines Gebäudes entspricht, wobei die Zugangstür (11) und die Induktionsspule (30) entlang der Längsachse des rohrförmigen Korridors (7) voneinander beabstandet sind.

2. Zugangssystem für Tiere gemäß Anspruch 1, wobei die Zugangstür (11) eben ist.

3. Zugangssystem für Tiere gemäß einem der vorangehenden Ansprüche, wobei die Länge des rohrförmigen Korridors (7) einstellbar ist.

4. Zugangssystem für Tiere gemäß einem der vorangehenden Ansprüche, wobei das Implantat einen Mikrochip umfasst.

5. Zugangssystem für Tiere gemäß einem der vorangehenden Ansprüche, wobei das Implantat Detektormittel umfasst, die dazu verwendet werden können, wenigstens einen klinischen Parameter des Tieres festzustellen, wobei die Steuerungsmittel dazu verwendet werden können, in Reaktion auf eine Änderung des induzierten elektromagnetischen Feldes ein Gesundheitssignal zu generieren, das für den klinischen Parameter kennzeichnend ist.

6. Zugangssystem für Tiere gemäß einem der vorangehenden Ansprüche, wobei die Steuerungsmittel (21) dazu verwendet werden können, die Stärke des induzierten elektromagnetischen Feldes einzustellen.

7. Zugangssystem für Tiere gemäß einem der vorangehenden Ansprüche, wobei die Steuerungsmittel (21) Schaltkreismittel umfassen.

8. Zugangssystem für Tiere gemäß einem der vorangehenden Ansprüche, wobei die Steuerungsmittel (21) Mikroprozessormittel umfassen.

9. Zugangssystem für Tiere gemäß einem der vorangehenden Ansprüche, wobei die Steuerungsmittel (21) Speichermittel umfassen.

10. Zugangssystem für Tiere gemäß Anspruch 9, wobei die Speichermittel dazu verwendet werden können, Daten zu speichern, welche die Identität nicht berechtigter Tiere anzeigen, die versuchen, in das Zugangssystem für Tiere einzudringen.

11. Zugangssystem für Tiere gemäß Anspruch 9 oder Anspruch 10, wobei die Speichermittel dazu verwendet werden können, Daten zu speichern, die die Häufigkeit anzeigen, mit der ein Tier vom System erfasst worden ist.

12. Zugangssystem für Tiere gemäß einem der vorangehenden Ansprüche, wobei die Steuerungsmittel (21) mit Anzeigemitteln ausgestattet sind.

13. Zugangssystem für Tiere gemäß einem der vorangehenden Ansprüche, wobei die Steuerungsmittel (21) mit Datenübertragungsmitteln versehen sind, um die Übertragung von Daten zwischen den Steuerungsmitteln (21) und einer externen elektronischen Datenverarbeitung zu ermöglichen.

14. Zugangssystem für Tiere gemäß einem der vorangehenden Ansprüche, wobei Tierabschreckungsmittel vorgesehen sind, die dazu verwendet werden können, ein nicht berechtigtes Tier vom Betreten des Zugangssystems für Tiere abzuhalten.

15. Zugangssystem für Tiere gemäß Anspruch 14, wobei die Tierabschreckungsmittel in Reaktion auf ein von den Steuerungsmitteln (21) generiertes Signal, das ein zur Benutzung des Zugangssystems für Tiere nicht berechtigtes Tier anzeigt, aktiviert werden.

16. Zugangssystem für Tiere gemäß Anspruch 14 oder Anspruch 15, wobei die Abschreckungsmittel eine Fluiddüse (39) umfassen, die dazu verwendet werden können, Fluide auf das nicht berechtigte Tier zu lenken.

17. Zugangssystem für Tiere gemäß Anspruch 16, wobei das System eine mit der Fluiddüse (39) verbundene Fluidquelle umfasst, die am System abnehmbar montiert ist.

18. Zugangssystem für Tiere gemäß einem der Ansprüche 15 bis 17, wobei die Abschreckungsmittel optische Mittel umfassen, die dazu verwendet werden können, ein abschreckendes optisches Signal abzugeben.

19. Zugangssystem für Tiere gemäß einem der vorangehenden Ansprüche, bei die Steuerungsmittel (21) eine Uhr und einen Zeitgeber umfassen, die vom Benutzer so programmierbar sind, dass sie den Zugang durch die Tür nur zu vorgegebenen Zeiten erlauben.

## Revendications

1. Un système d'accès d'animal à utiliser avec un animal possédant un implant inséré dans son tissu extérieur, le système comprenant ; une porte d'accès verrouillable (11), un encadrement de porte d'accès (29) qui encadre la périphérie d'une ouverture d'accès d'animal (31), avec une bobine d'induction (30) fonctionnant pour induire un champ électromagnétique à la porte d'accès (11), la bobine d'induction étant contrôlée par un moyen de contrôle opérationnel pour générer un signal de contrôle pour verrouiller ou déverrouiller la porte d'accès en réponse à un changement dans le champ électromagnétique induit généré suite à l'implant entrant dans le champ électromagnétique induit, la bobine d'induction (30) étant disposée de façon à ce que le champ électromagnétique se projette à l'avant de la bobine d'induction (30) et l'ouverture d'accès d'animal.
**Caractérisé en ce que** ledit système d'accès comprend un logement avant (3) relié à un logement arrière (5) par un corridor tubulaire télescopique (7), le corridor tubulaire télescopique (7) étant déplié ou replié pour correspondre à une épaisseur de porte ou de mur d'un bâtiment, la porte d'accès (11) et la bobine d'induction (30) étant espacées le long de l'axe longitudinal du corridor tubulaire (7).

2. Le système d'accès d'animal de la revendication 1 où la porte d'accès (11) est plane.

3. Le système d'accès d'animal selon l'une des revendications précédentes, où la longueur du corridor tubulaire (7) est réglable.

4. Le système d'accès d'animal de l'une des revendications précédentes, où l'implant comprend une micro puce.

5. Le système d'accès d'animal de l'une des revendications précédentes, où l'implant comprend un moyen détecteur fonctionnant pour détecter au moins un paramètre clinique de l'animal, le moyen de contrôle étant opérationnel pour générer un signal de santé indicateur du paramètre clinique, en réponse à un changement dans le champ électromagnétique induit.

6. Le système d'accès d'animal de l'une des revendications précédentes, où le moyen de contrôle (21) est opérationnel pour régler la force de champ électromagnétique induit.

7. Le système d'accès d'animal de l'une des revendications précédentes, où le moyen de contrôle (21) comprend un système de circuit.

8. Le système d'accès d'animal de l'une des revendications précédentes, où le moyen de contrôle (21) comprend un système de microprocesseur.

9. Le système d'accès d'animal de l'une des revendications précédentes, où le moyen de contrôle (21) comprend un système de mémoire.

10. Le système d'accès d'animal de la revendication 9, où le système de mémoire est opérationnel pour stocker des données indiquant l'identité des animaux non-autorisés tentant d'accéder au système d'accès d'animal.

11. Le système d'accès d'animal de la revendication 9 ou 10, où le système de mémoire est opérationnel pour stocker des données indiquant le nombre de fois qu'un animal a été détecté par le système.

12. Le système d'accès d'animal de l'une des revendications précédentes, où le moyen de contrôle (21) est fourni avec un système d'affichage.

13. Le système d'accès d'animal de l'une des revendications précédentes, où le moyen de contrôle (21) est fourni avec un système de transfert de données pour permettre aux données d'être transférées entre le système de contrôle (21) et un processeur de données électronique.

14. Le système d'accès d'animal de l'une des revendications précédentes, où le moyen de dissuasion de l'animal est fourni pour dissuader un animal non-autorisé d'entrer dans le système d'accès d'animal.

15. Le système d'accès d'animal de la revendication 14, où le moyen de dissuasion est activé en réponse à un signal généré par le moyen de contrôle (21) indiquant qu'un animal non-autorisé utilise le système d'accès d'animal.

16. Le système d'accès d'animal de la revendication 14 ou 15, où le moyen de dissuasion comprend une buse de liquide (39) fonctionnant pour diriger un liquide vers l'animal non-autorisé.

17. Le système d'accès d'animal de la revendication 16, où le système comprend une source de liquide connectée à la buse de liquide (39), la source de liquide étant montée de façon amovible sur le système.

18. Le système d'accès d'animal de l'une des revendications 15 à 17, où le moyen de dissuasion comprend un système optique fonctionnant pour émettre un signal optique de dissuasion.

19. Le système d'accès d'animal de l'une des revendications précédentes, où le moyen de contrôle (21) comprend une horloge et un minuteur qui sont programmables par l'utilisateur pour permettre l'accès par la porte à certains moments seulement.
